(19) Europäisches Patentamt / European Patent Office / Office européen des brevets

(11) **EP 3 702 231 B1**

(12) **EUROPEAN PATENT SPECIFICATION**

(45) Date of publication and mention
of the grant of the patent:
**13.04.2022   Bulletin 2022/15**

(21) Application number: **18873794.4**

(22) Date of filing: **31.10.2018**

(51) International Patent Classification (IPC):
*B61B 1/00* *(2006.01)*        *B61B 3/02* *(2006.01)*
*B61B 5/00* *(2006.01)*

(52) Cooperative Patent Classification (CPC):
**B61B 1/00; B61B 3/02; B61B 5/00;** Y02T 30/00

(86) International application number:
**PCT/BY2018/000020**

(87) International publication number:
**WO 2019/084653 (09.05.2019 Gazette 2019/19)**

(54) **STRING TRACK STRUCTURE**

KABELSPURSTRUKTUR

STRUCTURE DE VOIE À CÂBLES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **31.10.2017   EA 201800011**

(43) Date of publication of application:
**02.09.2020   Bulletin 2020/36**

(73) Proprietor: **Yunitski, Anatoli
Minsk 220051 (BY)**

(72) Inventor: **Yunitski, Anatoli
Minsk 220051 (BY)**

(74) Representative: **Biesse S.r.l.
Via Corfù, 71
25124 Brescia (IT)**

(56) References cited:
| | |
|---|---|
| WO-A1-95/27643 | RU-C1- 2 224 064 |
| RU-C1- 2 289 521 | RU-C1- 2 289 521 |
| RU-C2- 2 325 293 | US-A1- 2013 125 776 |
| US-A1- 2016 347 330 | US-A1- 2016 347 330 |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## Technical field

The invention relates to the area of transport, in particular, to the elevated transport systems of string type, with rail track structure, similar to tracks of suspended and overpass types. This invention can be efficiently utilized in rail transport systems for passenger and cargo traffic in conditions of rough cross-country terrain, such as on land (mountains, desserts), as well as on sea legs of transportation lines (including sea crossings, straits, rivers and water bodies), as well as during elaboration of intra-urban transport highways and in the construction of inter-workshop transport structures of widely distributed production enterprises or their associations.

## Background of Invention

Currently, the problem is topical to elaborate a transport system characterized by the absence of environmental pollution, as well as by maximum noise limitation, inconsiderable need for usable land areas, while it should ensure economic efficiency, high velocity of motion of vehicles, as well as low cost of construction and operation of the transport system.

Overpass transport system [1] is known, which comprises vertical support pillars and horizontal track beam mounted on their upper ends. Running rails made in form of rectangular-section boxes with longitudinal slots in side walls facing each other and flat guiding rail located between running rails are laid along beam. Vehicle has traction drive, as well as support wheels and guiding wheels mounted on suspension, former of which have axles passing through slots in boxes. Wheels extending beyond dimensions of vehicle are located inside boxes and are in contact with bottom walls thereof, and wheels of the latter are in contact with guiding rail on both sides.

The known transport system is characterized by high quality of protection against atmospheric precipitation and improved stabilization parameters. The disadvantage of such system is due to the considerable cost of laying tracks and noise of the boxes during rolling of wheels. In addition, the presence of joints in rail track and temperature deformation of rails of said transport system do not allow to develop velvet- smooth track for vehicle, which means that it is impossible to achieve high speed and high reliability of transportation. At the same time efficiency of vehicle movement stabilization by guiding wheels applied on one guiding rail appears to be insignificant, which also limits the area of practical use of similar systems.

A suspended transport system [2] is known, which comprises running track and vehicle in the form of body (housing). Running track is made in the form of two-rail track located on longitudinal beams installed on inner consoles of intermediate supports. The system is equipped with propulsor in the form of running carriage with electric motor and pneumatic stabilizer installed thereon. The body is installed under running carriage and connected thereto by means of pneumatic stabilizer.

The disadvantages of the above transport system are the increased material structural consumption due to severely penalized bearing of track beams, as well as difficulty of transportation to site of installation of beams of long span structures, labor-intensive installation thereof in field conditions of difficult terrain and limited possibilities of their use to cover large spans between adjacent intermediate supports.

A railway line [3] including a two-rail track 500 mm wide or more is known. The two-rail track is elevated above the ground on cables with use of suspensions. The cables themselves are suspended along the railway line above the ground surface by means of vertical supports. Cars or other sections of rolling stock of block trains are located on the upper surface of the two-rail track.

A disadvantage of such solution is that the rails in said transport system have low specific bearing capacity (if understood as the ratio of payload weight to their dead weight, which is particularly important for overpass and suspension type roads), which, in this case, leads to significant increase of cost of such transport system.

Also known is guide track [4] comprising two support elements and longitudinal element connected by cross elements, provided with side sheets connecting support elements to longitudinal element which is also sheet-shaped, wherein one part of cross elements may be connected to the support elements and the other part - to support and longitudinal elements.

The disadvantage of this technical solution is that the known transport system has a massive metal-consuming structure of rail track, which requires quite short spans between intermediate supports of overpass to ensure reliability thereof. Increasing spans between supports, despite structural rigidity of rails of such profile, leads to (provided reliability is guaranteed) an excessive increase in material capacity of rail track structure and decrease of its specific bearing capacity.

A transport system [5] consisting of support monorail and a transport module is known, wherein support monorail is embodied either as uniformly - directly resting via modules - tetrahedra on pales in the ground with starting slides and finishing anti-slopes, and its transport module as a platform with two cabins on four central two-edge wheels and four side support rollers, with auto-centering flywheels - gyroscopes, with possibility of body installation - cabin, tanks, containers, on-board platform, platform with racks for transportation of various cargoes. Or as another embodiment of such transport system, which consists of suspended monorail and transport module, in which the suspended monorail is I-beam suspended by stretches along the edges of the tetrahedron modules to two longitudinal bearing cables tightened by transverse ties and also has starting slides and finishing anti-slopes. In this case, the transport module is suspended.

A disadvantage of such solution is that said transport system has a low specific bearing capacity.

The main advantage of the abovementioned known track structures is that transport systems built on their basis practically do not occupy the land area, because track structures located above the urban development or natural landscape do not require earthen deposits, etc., for their support. When laying the route through deep gaps, gorges, rivers with deep channel, supports can be made with the help of rope suspension. As a result, it is possible to construct transport in areas with difficult landscape, and the costs of installation and operation of the transport system are reduced. The track supports can also be used to place outside lighting lights, to lay power cables, outside lighting cables, telephone cables, or other communications, as well as to land/disembark passengers or evacuate them from rolling stock in emergency situations.

The general disadvantage of the mentioned track structures is their low specific bearing capacity, which leads to considerable increase in their cost, as it makes the structure heavy, bulky and labor-intensive, as well as - results in increased material capacity of intermediate supports, which, in addition, are installed with small distances between them (spans).

Further development of structures of transport systems of suspended and overpass types was achieved with design and elaboration of transport system on the basis of string track structure by Yunitski, which is based on use as main structural elements of rail of longitudinally prestressed load-bearing string-rod components.

The transport system by Yunitski [6] is known, which includes at least one track structure in the form of load-bearing member tensioned above the base (foundation), at span between supports, encased in body with rolling (running) surface for movement of wheel moving means positioned on the said track structure. The above installation optimizes cross-sectional areas of load-bearing member and rail body with rolling (running) surface, as well as tension forces of track structure and load-bearing member of this structure, justifies calculation of sagging height of track structure between adjacent supports and height of supports.

However, the known transport system has insufficient rigidity, including torsional.

The closest to the proposed technical effect achieved is another known string track structure by Yunitski for a self-propelled track vehicle [7], which comprises at least one, tensioned above the foundation in span between anchor supports, length of rail in the form of load-bearing member enclosed in body with rolling surface for vehicle, as well as transition portions of the track on anchor supports, connected in span therebetween, with suspended portions of length of rail equipped with means of stabilization in space.

Such transport system provides high operational and technical characteristics of the track structure.

However, in spans of considerable length of the specified transport system, realization of the process of length of rail stabilization requires significant increase in material consumption of the structure and labor consumption of its installation.

Document WO 95/27643 A1 discloses a transport system comprising: a foundation, at least one rail with a top unit, and at least one mobile unit with wheels in contact with the rail and provided with a drive unit. The system is provided with a cable made up of individual wires or strips and are pre-stressed under a tension N1 determined by formulae, where N2 is the tensile strength and Q is the weight of the mobile unit. The cable hangs from alternate rigid and mobile supports, and the top unit of the rail is connected to the cable by means of an intermediate unit of variable height, its height increasing towards the mid-point between the supports.

At the heart of invention lies the task of achieving the following technical results:

- increased spans between adjacent supports of transport system without significant increase in weight of its track structure per linear meter;
- increased rigidity of track structure, its reliability and durability;
- increased dynamic stability of track structure between adjacent supports;
- enhanced functional capabilities of string track structure.

The successful solution of the task is ensured by the whole set of distinctive features of embodiment of the proposed string track structure.

## Summary of invention

The required technical tasks and desired aims of the present invention are achieved by using string track structure by Yunitski, which comprises at least one prestressed length of rail of width L, disposed above a base in a span between supports, said length of rail being provided with a means for the spatial stabilization thereof. The length of rail is in the form of a load-bearing member enclosed in a housing, whereas the stabilization means is in the form of balancing frames, fastened on the track structure in spans between supports, with the center of mass of each frame positioned below the length of rail at a distance $H_1$, of its axis, which is related to the height of frame $H_2$, by the ratio:

$$0{,}2 \leq H_1/H_2 \leq 1,$$

whereas the weight $P_0$, of each frame is related to the distance $H_1$, from the axis of the length of rail to the center of mass of the frame with a break torque M, due to the environmental load on the track structure, by the ratio:

$$1{,}1 \leq P_0 H_1/M \leq 10,$$

wherein the frames are spaced apart from each other and/or from the supports a a distance R, m, defined by the ratio:

$$20 \leq R/L \leq 5000.$$

The technical aim is also achieved by the fact that frames are fixed on the track structure by means of support pillars.

Said result is also attained provided that each support pillar has a height $H_0$, determined by the ratio:

$$0{,}01 \leq H_0/H_1 \leq 0{,}5.$$

The solution of the given problem is also ensured provided that the string track structure has two lengths of rails.

Said result is also achieved under condition that the pair of lengths of rails are united into the track by crossties.

The technical aim is also achieved by the fact that the frame is equipped with a load fixed on its lower edge.

The solution to the afore mentioned task is also achieved provided that dielectrics are used as material of the frame and/or the support pillar.

The technical objective is also achieved provided that the load of the frame is made in the form of cables, pipes, rods, wires fixed along the length of rail.

It is a further object of the present invention to provide a balancing frame for transporting electric power and/or transmitting communication information signals and/or transporting liquids and/or gases.

Another object of the present invention is also using, as load of frame, longitudinally fixed in relation to length of rail, electric power transmission line elements and/or information signal transmission line elements and/or pipeline elements.

## Brief description of drawings

The essence of the present invention is clarified through the drawings on Figs.1 - 9, which illustrate the following:

Fig.1 - schematic view of general view of string track structure by Yunitski - front view;
Fig.2 - schematic view of general view of string track structure by Yunitski - top view;
Fig.3 - schematic view of cross section of length of rail of string track structure by Yunitski (embodiment);
Fig.4 - schematic view of cross section of length of rail of string track structure of suspended type with vehicle (embodiment);
Fig.5 - schematic view of cross section of length of rail of string track structure of mounted type with vehicle (embodiment);
Fig.6 - schematic view of portion of track structure with balancing frame - side view;
Fig.7 - schematic view of embodiment of balancing frame in the form of advertising board;
Fig.8 - schematic view of embodiment of load of balancing frame in the form of overhead power transmission line (PTL);
Fig.9 - schematic view of embodiment of load of balancing frame in the form of pipeline elements.

**Embodiments of invention**

The essence of the claimed invention is further presented in a closer detail.

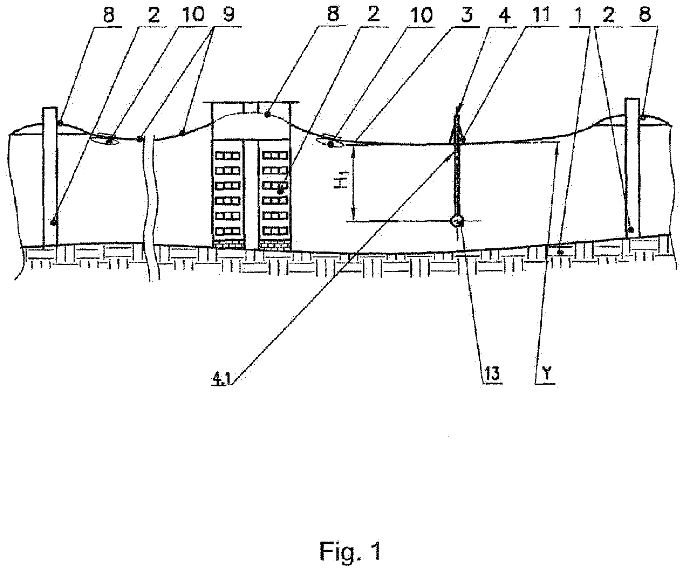

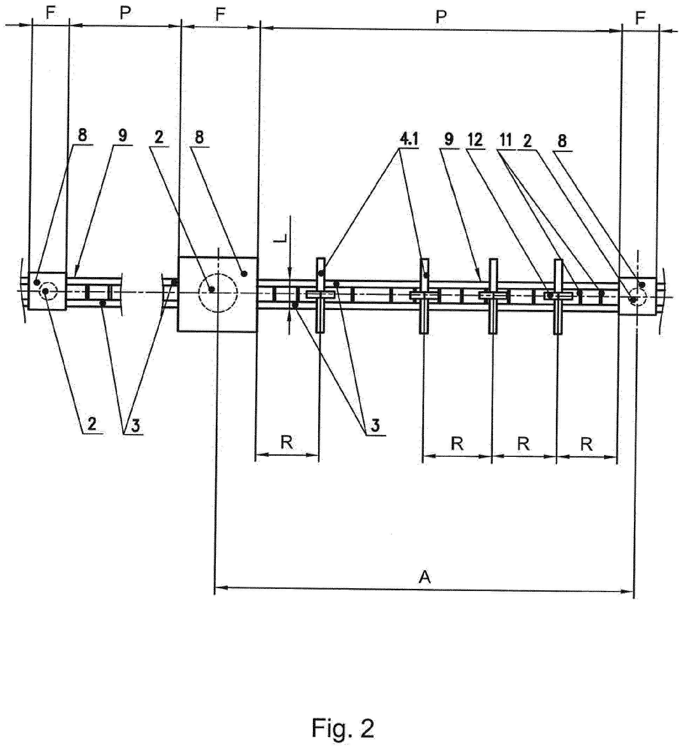

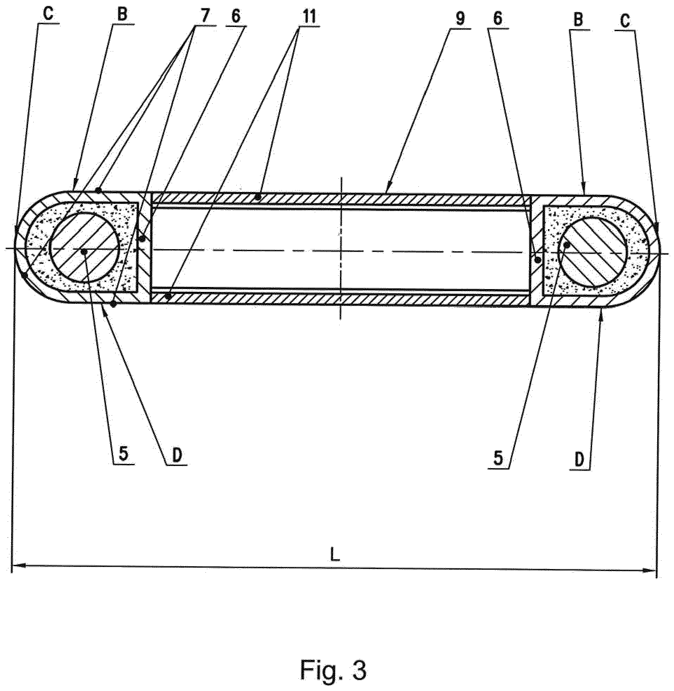

The claimed string track structure (see Figs. 1 and 2) comprises at least one prestressed length of rail 3 of length L, m, disposed above a base 1 in span A between supports 2, said length being provided with a means 4 for spatial stabilization thereof. Stabilization means 4 is in the form of balancing frame 4.1. Length of rail 3 is in the form of load-bearing member 5 enclosed in housing 6 which has rolling (running) surface 7 that can be configured on upper surface B, side surface C and lower surface D of housing (see Fig.3). String track structure also includes track transition portions F in the form of heads 8 on supports 2, said transition portions being connected to suspended portions P of track disposed in span A between supports (see Figs. 1 and 2).

At the same time, depending on the design solution, supports 2 can be reinforced concrete, pipe concrete, steel column and frame structures, buildings and structures specially equipped with landing and loading platforms, located between loading and unloading stations - passenger for passenger routes and cargo for freight routes. Heads 8 are intended for arrangement of transition portions F of track and/or systems of communication components located on track structure 9 - power supply and/or communication networks and/or pipelines, as well as for fastening (anchoring) of tensioned elements of load-bearing member 5 of track structure.

Fastening components of load-bearing member 5 in heads 8 of supports 2 represent any known means similar to those used in suspended and rope bridges, cable roads and prestressed reinforced concrete structures for fastening (anchoring) of tensioned load-bearing elements (reinforcement, cable ropes, high-strength wires, etc.).

The structure of support 2 may vary depending on the mounting position thereof. In particular, the shape of heads 8 with fastening components of load-bearing member 5 and communication networks on anchor supports, installed on turns of track, on linear portions of track, on mountains, or end-of-route sections, may be different since said components defining direction for the transition portion of the track must be smoothly coupled with the suspended portions P of track in span A between supports 2 (see Figs.1 and 2). Moreover, the shape of heads 8 of supports 2 can be determined by the fact that they serve as location of loading and unloading passenger and/or cargo stations, crossroads junctions (turn-out switches and turns) of track structure 9, or branch units of the communication system. In the central part of passenger and/or cargo stations, on the transition portions F of track there is level portion (not shown on figures).

Moreover, supports 2 can be combined with buildings and construction structures (residential, industrial, office, commercial and other buildings and structures).

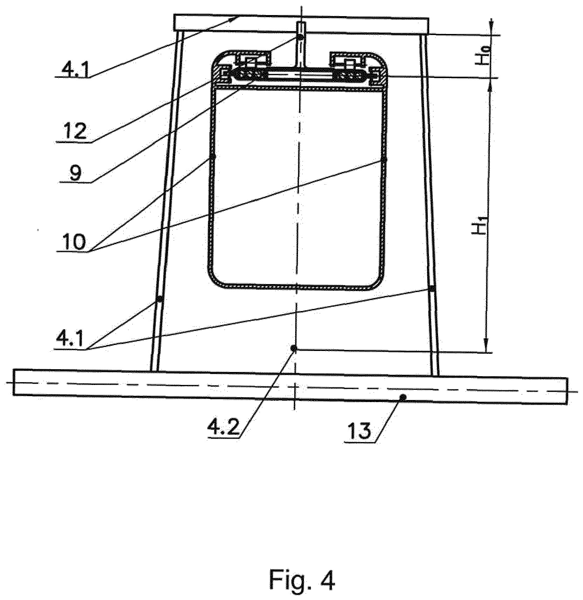

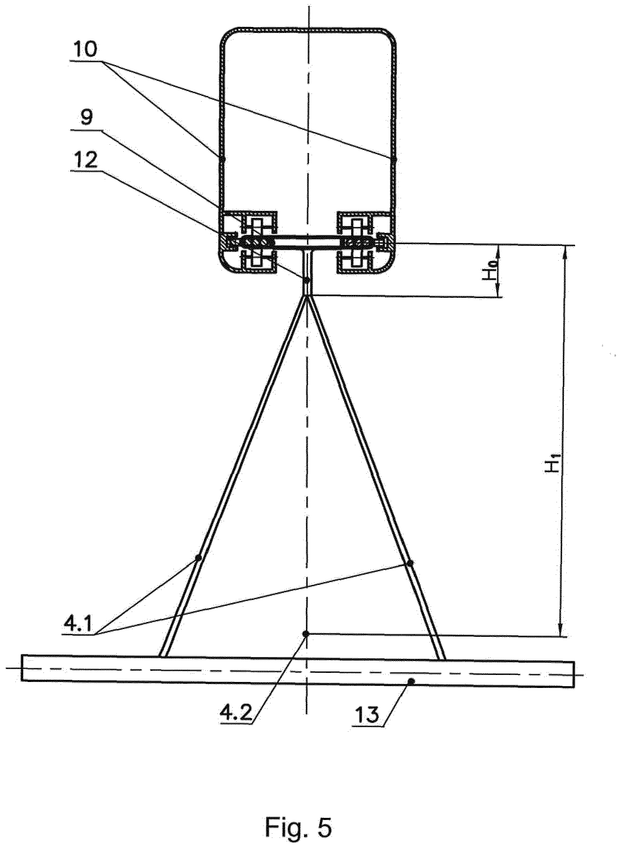

Track structure 9 may accommodate vehicles 10 (passenger and/or cargo and/or passenger) which may be either suspended from below to the track structure 9 as shown on Figures 1 and 4, or mounted from above as shown on Figure 5 on track structure 9.

Length of rail 3 represents a prefabricated structure consisting of prestressed (tensioned) load-bearing member 5 enclosed in housing 6 of length of rail 3, as shown on Fig.3.

Load-bearing member 5 of length of rail 3, in alternative embodiments, can be formed by placing prestressed extended load-bearing elements in corresponding housing 6, in the form of one or more bundles of high strength steel or composite wire, or of rods assembled in a single bundle or distributed over the cross-section of the cavity of the housing 6, or one or more standard twisted or non-twisted steel or composite cables, as well as threads, strands, strips, tapes, pipes or other extended profile elements made of high-strength materials of any known cross-section. The cavities in housing 6 between the elements of load-bearing member 5 of length of rail 3 (see Fig.3) can be filled with the hardening material on the basis of polymeric binders, composites or cement mixes which rigidly connect in single whole load-bearing member 5 with the respective housing 6 of length of rail 3, thus concreting its structure in a single entity.

With any versions of embodiment of filling housing 6 of length of rail 3 with load-bearing members 5, when it is fixed on supports 2 (in heads 8), load-bearing members 5 are made prestressed, at the same time, housing 6 of length rail 3 can be made prestressed, too.

Track structure 9 can be fixed in any known manner on heads 8 of supports 2.

An alternative embodiment of track structure is the case when string track structure is made in the form of two lengths of rails 3, whereas their housings 6 are connected by ties 11 into track. At the same time, housings 6 of lengths of rails 3 in rail track are made rigidly connected to each other by ties 11 (see Figs.2 and 3).

Structural connection of ties 11 with housings 6 of lengths of rails 3, depending on design, can be made by any of the known methods: welding, riveting, threaded joint, gluing, kinematic engagement - through different guides made integral with mating elements located on opposite ends of ties 11, by fastening those opposite ends of ties 11 to internal and/or external surfaces of housings 6 of lengths of rails 3 by different combinations of known methods of joining (not shown in figures).

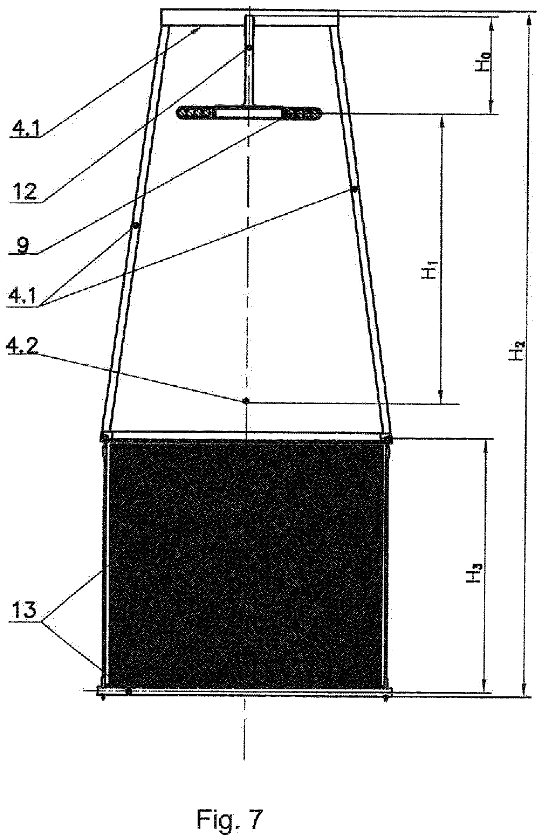

Conditions for ensuring dynamic stability of track structure 9 are determined based on requirements for optimization of frequency of natural oscillations of lengths of rails 3 and conditions for prevention of formation of flutter-type phenomenon during flowing of length of rail 3 by incoming air flow under different modes of operation and specific design of track structure 9, and are achieved thanks to use of balancing frames 4.1 (see Figs.4 - 9) of various modifications and versions of their embodiment, as means of stabilization of track structure 9.

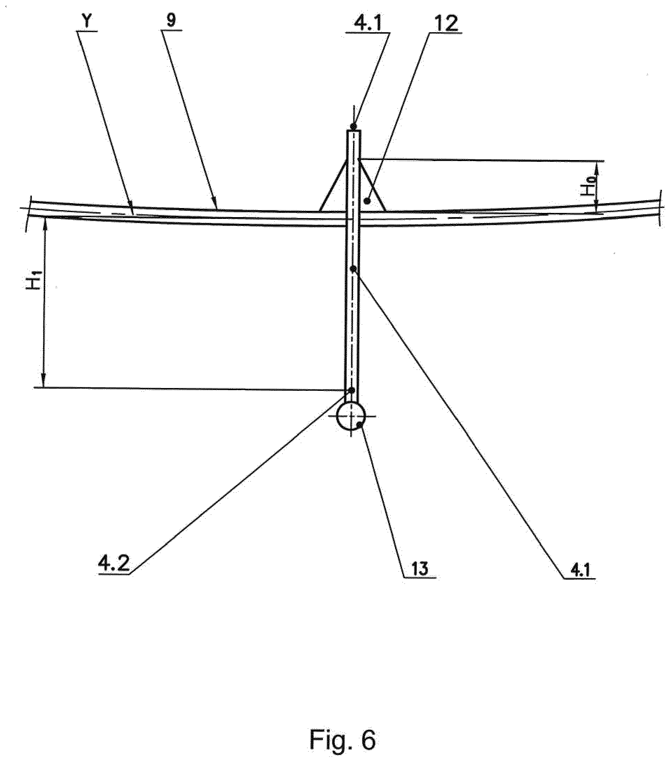

Center of mass 4.2 of frame 4.1 should be positioned below length of rail 3 at distance $H_1$, m, from its axial axis Y (see Figs. 6 - 9), with the dependence, related to height $H_2$, m, of frame 4.1, as follows:

$$0,2 \leq H_1/H_2 \leq 1 \qquad (1)$$

The values, mentioned in the ratio (1), correspond to optimum range of interdependence between distance of location of center of mass 4.2 of frame 4.1 from axis Y of length of rail 3 and height of frame 4.1.

If ratio (1) is less than 0,2, then, due to insufficient variation in frequency of natural oscillation, as well as due to low torsional rigidity of length of rail 3 of the formed track structure 9, such track will have insufficient rigidity and stability.

At the same time, it becomes difficult to provide in the frame an opening sufficient, per height, for passage through it of the vehicle 10 with the calculated midsection. The obvious condition of the track structure operation is that the dimensions of the frame opening should exceed the overall dimensions of the vehicle 10.

The ratio (1), by definition, should not be more than 1.

Also, to increase dynamic stability of track structure 9 and prevent formation of flutter-type phenomenon in span between supports 2, at least one frame 4.1 may be arranged on the track structure 9, which weight $P_0$, N, is related to distance $H_1$, m, from axis Y of length of rail 3 to center of mass 4.2 of frame 4.1 and with break torque M, Nm, due to environmental load on portion of track structure between balancing frames 4.1 , or between frames 4.1 and supports 2, by the ratio:

$$1,1 \leq P_0 H_1/M \leq 10 \qquad (2)$$

Location of balancing frames 4.1 on track structure 9 is determined by technical assignment for the design thereof, according to which quantity of such frames 4.1 installed can be more than one per span, or just one frame 4.1 can be installed in a span, or there can be zero frames 4.1 provided in spans, due to short length of such spans.

Indicated values of ratio (2) correspond to optimum range of values of weight of frame 4.1, leverage from axis Y of length of rail 3 to center of mass 4.2 of frame 4.1 and maximum break torque due impact of external environment on track structure.

With the ratio (2) less than 1,1, it becomes impossible to significantly change frequency response of such oscillating contour on large spans A of transport system and to provide dynamic stability of track structure 9, which leads to increase of probability of flutter type phenomenon under influence of lateral pulsating wind.

With the ratio (2) more than 10, inefficient use of load-bearing capacity of prestressed track structure, material overrun and increase in cost thereof are observed.

In any of the non-limiting embodiments of the disclosed track structure, various non-exclusive embodiments of the stabilization means are possible. In particular, frame 4.1 may be embodied to rest from above on top of length of rail 3 of track structure 9 (or on track of lengths of rails 3) with suspended vehicle 10 (see Figs.1, 4, 6 - 9), or may be suspended to track structure 9 with vehicle 10 being mounted on that track structure 9 (see Fig.5).

Depending on embodiment, frame 4.1 can be fastened to track structure 9 in two ways by means of support pillar 12. In the first case, on suspended track structure 9 by means of mounted (hinged) support pillar 12, and on mounted track structure 9 by means of suspended support pillar 12. In this way, its maximum stability and stabilization of location in space are achieved, which, in turn, excludes probability of occurrence of flutter-type phenomenon in track of lengths of rails 3 of track structure 9.

Essential impact in increasing stability and rigidity of track structure 9, as well as in preventing occurrence of flutter-type phenomenon, is provided by both the way frames 4.1 are positioned from each other and/or from supports 2, and by selection of value of height of support pillar 12 rigidly fixed on frame 4.1, via which frame 4.1 rests on length of rail 3.

In accordance of any non-limiting variants of alternative embodiment of track structure 9, frames 4.1, along the track of length of rail 3, in span A between adjacent supports 2, may be preferably positioned from each other, or from frame 4.1 to nearest support 2, at distance R, m, determined by the ratio:

$$20 \leq R/L \leq 5000, \qquad (3)$$

whereby frame 4.1 is fastened on length of rail 3 via support pillar 12 rigidly fixed thereupon, of height $H_0$, m, determined by the ratio:

$$0{,}01 \leq H_0/H_1 \leq 0{,}5. \qquad\qquad (4)$$

When frames 4.1 are located at distances R, m, from each other and/or relative to supports 2 according to values determined by the ratio (3), it becomes very feasible to ensure the required increase of dynamic stability and rigidity of track structure 9 without significant increase of its weight.

If the ratio (3) is less than 20, such embodiment of track structure 9 leads to unjustified increase in material capacity of the entire structure and hence in the cost of transport system. Furthermore, in this case, there is inefficient use of load-bearing capacity of length of rail 3 of prestressed track structure 9, which is unacceptable.

If the ratio (3) is more than 5000, it is not possible to significantly change frequency response of natural oscillations of portion of length of rail 3 and to provide dynamic stability of track structure 9 in its entirety, which leads to increase of probability of flutter type phenomenon occurrence during operation.

When frames 4.1 are supported on length of rail 3 through support pillar 12 rigidly fixed thereon, parameters of which are in accordance with values determined by the ratio (4), it is possible to easily provide the required increase of dynamic stability of track structure 9 without significant increase of its weight.

If the ratio (4) is less than 0.01, it will be difficult to embody design solution without significant overconsumption of materials of track structure 9, otherwise, in such case, support pillar 12 and its fixation to length of rail 3 should be made too micro-sized, which is not justified structurally.

At ratio (4) more than 0.5 - dynamic stability of track structure 9 is significantly reduced, or increase in material consumption of structure and its cost is observed.

In any of non-limiting embodiments of claimed track structure 9 and various non-exclusive embodiments of stabilization means, in order to prevent formation of flutter type phenomenon of track of length of rail 3, on that track, as a means of stabilizing track structure 9, in span A between adjacent supports 2, at least one frame 4.1 made in accordance with the above structural parameters is rigidly fixed to support pillar 12. In particular, frame 4.1 may be formed to rest on top of track of lengths of rails 3 of track structure 9, which is equipped with suspended vehicle 10 (see Figs.1, 2, 5 - 8), or can be suspended to track structure 9, which is equipped with mounted vehicle 10 (see Fig.5).

Increase of hardness, reliability and durability, as well as increase of dynamic stability of string track structure 9 between adjacent supports and prevention of flutter-type phenomenon thereon are among the priority goals of embodiment of the proposed technical equipment.

In this regard, in some practical cases, it is preferable that string track structure 9 be provided with two lengths of rails 3 joined in a track by ties 11 (see Fig.2). This will make it possible to significantly increase torsional rigidity of track of lengths of rails 3 and track structure 9 as a whole.

Prevention of resonance probability of self-induced oscillations of track structure 9 under influence of unfavorable factors of external environment leading to possibility of flutter type phenomenon occurrence is achieved thanks to the fact that frame 4.1 is equipped with load 13 fixed on its lower edge (see Figs.1, 4 - 9).

It is expedient that in any of the non-limiting variants of track structure 9 and, specifically, at embodiment of structure of frame 4.1, as its load 13, advertising board and/or solar panel could be used, which will allow, provided that the requirements of environmental, fire and other types of safety, as well as aesthetic norms, are met, to expand the functional capabilities of string track structure 9.

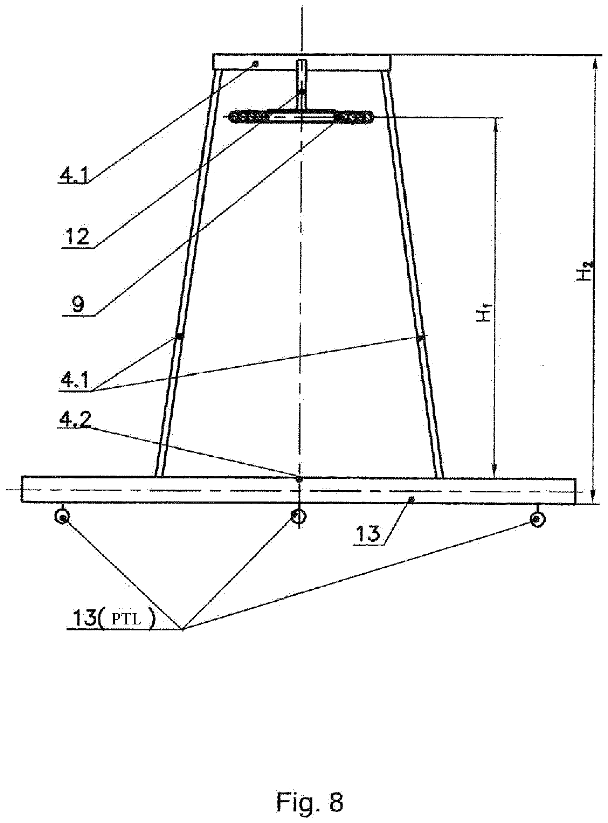

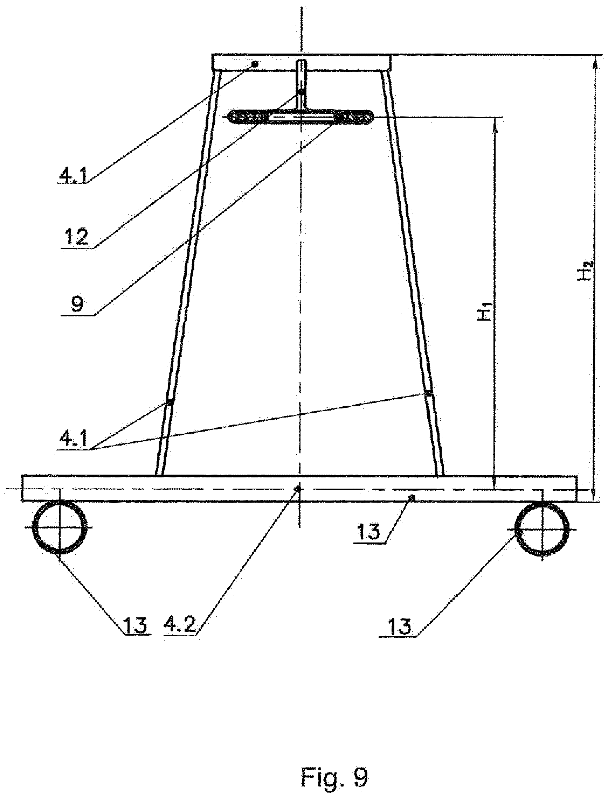

In a preferred embodiment of the invention, load 13 of frame 4.1 may be in the form of cables, pipes, rods, wires, panels or the like and combinations thereof and fastened along length of rail 3, whereby it is desirable to use dielectrics as material of frame 4.1 and/or the support pillar 12. At the same time, depending on corresponding design and technical justification of their availability, quantity and parameters, as well as on condition of structural support of meeting requirements of ecological, sanitary and hygienic, fire and other types of safety, it is advisable that, as load 13 of frames 4.1, longitudinally to length of rail 3, elements of power transmission line (PTL) and/or lines of information signals transmission, and/or elements of pipelines (as, for example, shown on Figs.8 and 9), which will allow them to be used in the infrastructure of extended life support systems of cities, settlements, as well as, if necessary, in case of direct life support of track structure 9 with electric systems, gas, water, heat and information support, of both main transport structures, as well as transport structures of local importance, as well as - as sources of renewable energy positioned on track structure 9, that is solar modules (batteries and/or collectors, not shown on Figs), to be used.

A preferred embodiment of the invention, regardless of the number of lengths of rails 3 of track structure 9, is a suspended embodiment of vehicle 10 and, accordingly, mounted arrangement of pillar 12 of frame 4.1. Thus, maximum stability and spatial stabilization of position of track structure 9 are achieved, which, in turn, eliminates possibility of occurrence of flutter phenomenon of track of lengths of rails 3 and increases the safety of operation of track structure 9.

The object of the present invention is also using - on string track system by Yunitski, as load 13 of frame 4.1 - of elements of power transmission line and/or line of information signals transmission and/or pipeline elements fixed on frame 4.1 longitudinally of length of rail 3, for transportation of electric power and/or transmission of communication information signals, as well as liquids or gases, respectively.

**Industrial applicability**

In assembled form, track structure 9 is arranged between anchor supports and intermediate supports 2 (see Figs.1 and 2) of assembled transport system, whereas its load-bearing members 5, and, if necessary, the housings 6 of lengths of rails 3 themselves, before their concreting, are pulled with anchors up to the calculated forces, after which they are fixed, as mentioned above, in prestressed state with use of hardening material.

The construction of the illustrated string track structure by Yunitski includes mounting supports 2 on base 1, suspending and tensioning between supports 2, in housing 6, of at least, two load-bearing members 5, subsequent fixation of ends of these load-bearing members 5 in anchor units of heads 8 of supports 2, as well as concreting of load-bearing members 5 in housings 6 provided with rolling surfaces 7, made according to specific embodiment on upper B and outer C side faces and/or upper B, outer C and lower D side faces thereof. Track structure 9 formed in this way comprises track 3 for motion of vehicle 10 and transition portions F of track in the form of heads 8 on supports 2 coupled with suspended portions P of track in span A between supports 2.

Embodiment of two lengths of rails 3 in rail track of housings 6, rigidly interconnected by ties 11, provides formation of track profile with minimum aerodynamic drag and high parameters of torsional rigidity.

In most general variant, of the plurality of alternative embodiments, string track structure by Yunitski as per above described construction operates as follows.

Via stair flights, elevators or escalators, passengers climb to stopping platforms (not shown on Figs.) and board vehicle 10. From supply substation through contact stripes of track structure 9, electric power is supplied to power plant (not shown on Figs), which drives vehicle 10 with passengers.

Upon completion of formation of load-bearing member 5 of length of rail 3, frames 4.1 are installed thereon, and on them, in turn, elements of power transmission line and/or lines of information signals transmission and/or elements of pipelines are fixed.

During operation of transport system, wheeled vehicle 10 is smoothly rolled from the transition portion F on head 8 of support 2 onto suspended portion P of track in span A between adjacent supports 2 to achieve high velocity (around 100 - 150 km/h), and passes by inertia an additional portion of track (not less than 2/3 of lifting height) in phase of upward movement to next transition portion F on head 8 of adjacent support 2. The drive of vehicle 10 can be activated only at the final stage of movement - for lifting to the next transition portion F of track structure 9, but, if necessary, can be operated all over entire length thereof.

At the same time, thanks to corresponding embodiment of track of length of rail 3, as well as due to use of frame 4.1 of certain structure on suspended portion P of track structure 9 in span A between adjacent supports 2, stabilization of track structure 9 in space is achieved and comfort and safety of movement for passengers are increased.

As a result, what achieved is the following: increased spans between adjacent supports of track structure by Yunitski without significant increase in weight of linear meter thereof; increased rigidity of such track structure, its reliability and durability; increased dynamic stability of string track structure by Yunitski in spans between adjacent supports; enhanced functional capabilities of the proposed string track structure by Yunitski.

Information sources

1. Patent RU № 2153430, IPC B61B 5/00, publ. 27.07.2000 (parallel).
2. Patent RU № 2464188, IPC B61B 3/02, publ. 20.10.2012 (parallel).
3. Patent RU № 2289520, IPC B61 B 3/00, publ. (parallel).
4. Patent RU № 2179124, IPC B61 B 13/00, publ. 10.02.2002 (parallel).
5. Patent RU № 2374102, IPC B61B 3/02, publ. 27.11.2009 (parallel).
6. Patent RU № 2475387, IPC B61B 3/00, publ. 20.02.2013 (parallel).
7. Patent RU № 2325293, IPC B61B 3/02, publ. 27.05.2008 (parallel).

**Claims**

1.    String track structure, wherein above a base (1) in a span (A) between supports (2) at least one prestressed length of rail (3) of width L, is disposed, said length of rail (3) being provided with a means (4) for the spatial stabilization thereof and consisting of a load-bearing member (5) enclosed in a housing (6) with a running surface (7) for a wheeled vehicle, whereas the stabilization means (4) is in the form of balancing frames (4.1), fastened on the track structure (9) in spans between the supports (2), with the center of mass (4.2) of each frame (4.1) positioned below the length of rail (3) at distance $H_1$, of its axis, which is related to the height of a frame $H_2$, defined by the ratio:

$$0{,}2 \leq H_1/H_2 \leq 1,$$

whereas the weight $P_0$, of each frame (4.1) is related to the distance $H_1$, from the axis of the length of rail (3) to the center of mass (4.2) of each frame (4.1) with a break torque M, Nm, due to the environmental load on the track structure, defined by the ratio

$$1{,}1 \leq P_0 H_1/M \leq 10,$$

wherein the frames (4.1) are spaced apart from each other and/or from the supports (2) at distance R, defined by the ratio:

$$20 \leq R/L \leq 5000.$$

2. String track structure according to claim 1, **characterized in that** the frames (4.1) are fixed on the track structure (9) by means of support pillars (12).

3. String track structure according to claim 2, **characterized in that** each support pillar (12) has a height $H_0$, defined by the ratio:

$$0{,}01 \leq H_0/H_1 \leq 0{,}5.$$

4. String track structure according to claim 1, **characterized in that** it has two lengths of rails (3).

5. String track structure according to claim 4, **characterized in that** the pair of lengths of rails (3) is united into the track by crossties (11).

6. String track structure according to claims 1 and 2, **characterized in that** the frame (4.1) is equipped with a load (13) fixed on its lower edge.

7. String track structure according to any of claims 1 and 2, **characterized in that** dielectrics are used as material of the frame (4.1) and/or the support pillar (12).

8. String track structure according to any of claims 1 and 6, **characterized in that** the load (13) of the frame (4.1) is made in the form of cables, pipes, rods, wires fixed along the length of rail (3).

**Patentansprüche**

1. Seil-Gleisstruktur, bei der oberhalb einer Basis (1) in einer Spannweite (A) zwischen Stützen (2) mindestens eine vorgespannte Länge einer Schiene (3) mit der Breite L angeordnet ist, wobei die Länge der Schiene (3) mit einem Mittel (4) zu ihrer Raumstabilisierung versehen ist und aus einem lasttragenden Element (5) besteht, das in einem Gehäuse (6) mit einer Lauffläche (7) für ein Räderfahrzeug eingeschlossen ist, wobei die Stabilisierungsmittel (4) in Form von Ausgleichsrahmen (4.1) ausgebildet sind, die auf der Gleisstruktur (9) in Spannweiten zwischen den Stützen (2) befestigt sind, wobei der Schwerpunkt (4.2) jedes Rahmens (4.1) unterhalb der Länge der Schiene (3) bei einem Abstand H1 seiner Achse positioniert ist, der in Bezug zu der Höhe H2 eines Rahmens steht, definiert durch das Verhältnis:

$$0{,}2 \leq H1/H2 \leq 1,$$

wobei das Gewicht Po jedes Rahmens (4.1) im Verhältnis zum Abstand H1 von der Achse der Länge der Schiene (3) zum Massenschwerpunkt (4.2) jedes Rahmens (4.1) steht, mit einem Bruchdrehmoment M, Nm aufgrund der Umgebungsbelastung auf die Gleisstruktur, definiert durch das Verhältnis:

$$1{,}1 \leq P_0H1/M \leq 10,$$

wobei die Rahmen (4.1) voneinander und/oder von den Stützen (2) mit einem Abstand R beabstandet sind, definiert durch das Verhältnis:

$$20 \leq R/L \leq 5000.$$

**2.** Seil-Gleisstruktur nach Anspruch 1, **dadurch gekennzeichnet, dass** die Rahmen (4.1) mit Hilfe von Stützpfeilern (12) an der Gleisstruktur (9) befestigt sind.

**3.** Seil-Gleisstruktur nach Anspruch 2, **dadurch gekennzeichnet, dass** jeder Stützpfeiler (12) eine Höhe $H_0$ aufweist, definiert durch das Verhältnis:

$$0{,}01 \leq H0/H1 \leq 0{,}5.$$

**4.** Seil-Gleisstruktur nach Anspruch 1, **dadurch gekennzeichnet, dass** sie zwei Längen von Schienen (3) aufweist.

**5.** Seil-Gleisstruktur nach Anspruch 4, **dadurch gekennzeichnet, dass** das Längenpaar (3) von Schienen durch Querschwellen (11) zum Gleis zusammengesetzt wird.

**6.** Seil-Gleisstruktur nach den Ansprüchen 1 und 2, **dadurch gekennzeichnet, dass** der Rahmen (4.1) mit einer an seiner Unterseite befestigten Last (13) ausgestattet ist.

**7.** Seil-Gleisstruktur nach einem der Ansprüche 1 und 2, **dadurch gekennzeichnet, dass** als Material des Rahmens (4.1) und/oder des Stützpfeilers (12) Dielektrika verwendet werden.

**8.** Seil-Gleisstruktur nach einem der Ansprüche 1 und 6, **dadurch gekennzeichnet, dass** die Last (13) des Rahmens (4.1) in Form von entlang der Länge der Schiene (3) befestigten Kabeln, Rohren, Stäben, und Drähten ausgeführt ist.

**Revendications**

**1.** Structure de voie ferrée, dans laquelle au-dessus d'une base (1) dans une travée (A) entre des supports (2) au moins une longueur précontrainte de rail (3) de largeur L est disposée, ladite longueur de rail (3) étant pourvue d'un moyen (4) pour sa stabilisation spatiale et consistant en un élément porteur (5) incorporé dans un boîtier (6) avec une surface de course (7) pour un véhicule à roue, dans laquelle le moyen de stabilisation (4) se présente sous la forme de châssis d'équilibrage (4.1) fixé sur la structure de voie (9) dans une travée entre les supports (2), avec le centre de masse (4.2) de chaque châssis (4.1) positionné au-dessous de la longueur de rail (3) à la distance H1, de son axe, qui est lié à la hauteur d'un châssis H2, définie par le rapport:

$$0{,}2 \leq H1/H2 \leq 1,$$

dans laquelle le poids $P_0$, de chaque châssis (4.1) est lié à la distance H1 de l'axe de la longueur de rail (3) au centre de masse (4.2) de chaque châssis (4.1) avec un couple de rupture M, Nm, en raison de la charge environnementale sur la structure de voie, définie par le rapport:

$$1{,}1 \leq P_0H1/M \leq 10,$$

dans laquelle les châssis (4.1) sont espacés les uns des autres et/ou des supports (2) à une distance R, définie par le rapport:

$$20 \leq R/L \leq 5000.$$

**2.** Structure de voie ferrée selon la revendication 1, **caractérisée en ce que** les châssis (4.1) sont fixés sur la structure de voie (9) au moyen de piliers de support (12).

**3.** Structure de voie ferrée selon la revendication 2, **caractérisée en ce que**: chaque pilier de support (12) présente une hauteur $H_0$, définie par le rapport:

$$0,01 \leq H0/H1 \leq 0,5.$$

**4.** Structure de voie ferrée selon la revendication 1, **caractérisée en ce qu'**elle présente deux longueurs de rails (3).

**5.** Structure de voie ferrée selon la revendication 4, **caractérisée en ce que** la paire de longueurs de rails (3) est unie dans la voie par des traverses (11).

**6.** Structure de voie ferrée selon la revendication 1 et 2, **caractérisée en ce que** le châssis (4.1) est équipé d'une charge (13) fixée sur son bord inférieur.

**7.** Structure de voie ferrée selon l'une quelconque des revendications 1 et 2, **caractérisée en ce que** des diélectriques sont utilisés comme matériau du châssis (4.1) et/ou du pilier de support (12).

**8.** Structure de voie ferrée selon l'une quelconque des revendications 1 et 6, **caractérisée en ce que** la charge (13) du châssis (4.1) est réalisée sous la forme de câbles, de tuyaux, de tiges, de fils fixés le long de la longueur de rail (3).

8　2　10　9　　　　8　2　10　3　4　11　1　2　8

$H_1$

4.1　　　　　　　　　　　　　13　Y

Fig. 1

Fig. 2

EP 3 702 231 B1

Fig. 3

14

Fig. 4

Fig. 5

Fig. 6

17

Fig. 7

4.1

12

9

4.1

4.2

H₂

H₁

13

13( PTL )

Fig. 8

19

Fig. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9527643 A1
- RU 2153430
- RU 2464188
- RU 2289520
- RU 2179124
- RU 2374102
- RU 2475387
- RU 2325293